# EUROPEAN PATENT APPLICATION

(11) **EP 4 015 113 A1**
(43) Date of publication of application: **22.06.2022**
(21) Application number: 20215385.4
(22) Date of filing: 18.12.2020
(51) Int. Cl.: B22F 10/28, B33Y 10/00, B33Y 30/00, B33Y 80/00, B22F 3/11, B29C 45/14, B23K 26/08, B23K 26/38, B21D 5/02, B21D 28/26, B22F 5/10

(54) **MACHINE, AND CONSTRUCTION PART**

(71) Applicant: Bystronic Laser AG, 3362 Niederönz (CH)
(72) Inventor: SEIBERT, Friedemann, 66484 Winterbach/Pfalz (DE)
(74) Representative: Frei Patent Attorneys

(57) **Abstract**

A metal sheet working and/or pipe working machine (100) comprising a lightweight construction part (104) is provided, the lightweight construction part comprising a closed outer shell and framework in an interior of the closed outer shell, and a void volume enclosed by the outer shell. The void volume is filled by a gas different from air, especially a gas being lighter than air, for example Helium. The lightweight construction part may especially be a part that is moved and accelerated quickly during use of the machine.

## Description

### FIELD OF THE INVENTION

The invention is in the field of machines for metal sheet working and pipe working, such as laser cutting machines or metal sheet bending machines. It concerns a machine comprising a lightweight construction part, as well as a lightweight construction part for such a machine, as well as a method of manufacturing such a construction part.

### BACKGROUND OF THE INVENTION

Industrial metal sheet working and pipe working machines, such as laser cutting machines, metal sheet bending machines etc., have parts that are subject to movements with high velocities and high accelerations, while these parts need to have a high mechanical strength and stability. For example, in laser cutting of metal sheets, a directed laser beam emitted by a laser head moves relative to the metal workpiece to locally melt the metal material at the position of incidence of the laser beam on the workpiece. The efficiency of the process depends critically on the achievable velocities and accelerations of the laser head while the position of the laser head has to be defined very precisely at any time. Consequently, the construction holding the laser head needs to be extremely stable - despite its having to be moved and accelerated very quickly. Similarly, in metal sheet bending machines, parts are pressed against each other, with a metal sheet between them. The parts and the structures that hold them are subject to high forces during the process. Also, for the industrial process to be efficient, they need to move and accelerate quickly, for example to be brought into position after loading the workpiece. It is thus both, a requirement and a challenge to design such parts to be as lightweight as possible without compromising the mechanical strength.

It has been known to use porous material, such as metal foams, for lightweight parts. Such porous materials may be generally lightweight and may nevertheless have an enhanced stability with respect to certain loads (for example flexural loads) compared to a dense, but consequently smaller (for example thinner) bulk part of the same mass. However, there are limits to this approach. Especially, the mass-to-stability ratio is still limited also for metal foam parts.

### SUMMARY OF THE INVENTION

It is an object of the present invention to provide a metal sheet or pipe working machine and a lightweight part for a such a metal sheet or pipe working machine as well as a method of producing lightweight parts for metal sheet or pipe working machines, which overcome drawbacks of the prior art and which especially have an improved weight- (mass-) to stability ratio.

This object is achieved by the invention as defined in the claims.

Especially, according to an aspect of the invention, a metal sheet working and/or pipe working machine comprising a lightweight construction part is provided, the lightweight construction part comprising a closed outer shell, a framework in an interior of the closed outer shell, and a void volume enclosed by the outer shell.

In this, the void volume of the lightweight construction part is filled by a gas different from air at standard conditions, especially a gas being lighter than air. The void volume may be filled by a gas having a different composition than air and/or may be a vacuum volume.

The gas filling the void volume may be a gas having a lower density than dry air (at standard conditions, i.e. standard pressure of 10⁵ Pa and standard temperature 20°C). In this, the density is significantly lower than the density of dry air at standard conditions, i.e. different from an arbitrary variation due to small variations during manufacturing, and lower by at least 10% or at least 20%.

Especially, the gas may have a smaller molar mass than air (the molar mass of air being defined as the weighted average of the molar masses of the constituents of dry air). More in particular, it may be Helium or possibly also NH₃, CH₄ Ne, etc.,

In addition or as an alternative, the gas may be, at the standard temperature, at a substantively lower pressure than standard pressure.

The outer shell is airtight. Especially, it may for example have a permeability to the main gases contained in air (Nitrogen, Oxygen, Argon) that is as low as for the cumulated partial pressure of these gases in the void volume to not raise by more than 20 mbar in a year when kept in air at standard atmospheric pressure at room temperature. Due to the outer shell being airtight, there cannot be a later change of mass that would cause a different vibration behavior of the construction part and/or neutralize the advantages of the construction part being more lightweight than comparable prior art construction parts.

The framework may transfer forces from one side of the outer shell to another side of the outer shell. Generally, the framework may be arranged (and generally will be arranged) to transfer forces on any side of the outer shell to other parts of the outer shell (often an opposing side; the construction part may possibly have a complicated shape, and the force distribution across the shell may vary strongly). The outer shell may especially be supported by the framework on all sides on its inner face. By providing the framework in a special shape, for example with ribs in a well-defined arrangement, the stiffness of the construction part may be tailor-made and may, given the appropriate arrangement be especially higher than for prior art part with porous filing without any pre-defined arrangement.

The void volume may be contiguous, whereby the framework may be an open porous structure. Alternatively, the void volume may be constituted by discrete void volume portions, such as pores of a closed porous structure. When the void volume is separated into different discrete parts, a first advantage is that aging by diffusion of air into the structure is further reduced, since a situation in which one weakness leads to an enhanced air diffusion at a particular spot does not lead to air diffusion into the entire void volume. A second advantage is that when the void volume is separated into different discrete void volume portions, these void volume portions may be optimized individually by being filled with different gas compositions/pressures - so that desired stiffness/vibrational behaviors can be achieved. In a group of embodiments with discrete void volume portions, therefore, the separation between these portions may be airtight.

The framework may be a regular or irregular structure. For example, the void volume may be a regular or irregular grating. Such grating allows to flexibly adjust the properties of the construction part in terms of vibrational behavior (no resonances at frequencies that are excited during normal expected use) and stiffness.

The framework may have a reproducible structure, i.e. in a batch of the parts, all parts may have a same framework - in contrast to parts comprising a conventional metal foam where the distribution of pores is subject to chance. The framework may be coordinated with the use of the part and the requirements in terms of superimposed vibrations and necessary stiffness.

Especially, the framework may have a shape specifically designed in view of the purpose of the construction part and a normal use load distribution across the part. A method of obtaining such a construction part may therefore comprise a designing stage prior to manufacturing. The designing stage may first comprise determining a load distribution by a suitable method, such as a numerical method like finite element calculation. In simple cases, for example with a uniaxial load, a numerical calculation may not be required for determining. Then, the method comprises designing the construction part with the framework, wherein the framework comprises a plurality of beams comprising beams extending essentially parallel to directions of primary load. Especially, the framework may be designed to be stiffer in directions of primary load than in directions different therefrom. In addition or as an alternative, the framework may be designed to comprise more material in zones of high load than in other zones.

The material of the framework may be the same as the material of the closed shell, and/or the framework and the shell may be contiguous. Especially, the shell and the framework may be metallic. Alternatively, the shell and the framework may be of a polymer based material or of ceramics. Metals that may be used may include metals known for being suitable for additive manufacturing processes, such as Aluminum alloys (for example AlSi10Mg) or steel (for example 1.4404) or also Copper alloys or Titanium.

The construction part may especially be a moving part of the machine. To this end, the machine may comprise, in addition to the construction part, a drive for moving the construction part relative to a base of the machine.

In addition to the machine, the present invention also concerns the construction part per se, as well as a batch of the construction parts, wherein within the batch the frameworks in the interior are identical, as opposed to a batch of metal foam parts.

For manufacturing the construction part, additive manufacturing may be used. Additive manufacturing methods (sometimes referred to as 3D-Printing in a general sense) are known in the art and include manufacturing methods of metallic and ceramic parts in addition to the well-known 3D polymer printing manufacturing methods. For metallic parts, especially selective laser melting, selective laser sintering are known, as well as electron-beam additive manufacturing techniques that are carried out in vacuum. The present invention, however, is not restricted to any particular additive manufacturing technique.

For manufacturing, an additive manufacturing apparatus is provided. The apparatus or a workspace thereof is exposed to the desired light gas and/or to a partial vacuum. To this end, for example a similar set-up as known from electron-beam additive manufacturing machines may be used. The atmosphere of light gas and/or partial vacuum is maintained until the shell is completed, i.e. the light gas atmosphere and/or partial vacuum is present at least during a final stage of the process in which the shell is completed.

The light gas atmosphere may for example be a Helium atmosphere. It is even an option provide the Helium with overpressure during the additive manufacturing process. After the process, the Helium will be absorbed and may even diffuse out of the part while the heavier gases that form the air are prevented from diffusing into the material and into the void volume, the diffusion rate of He through materials, including metals, is much higher than the one of air. This may advantageously result in a very lightweight "vacuum" type of part.

The manufacturing process may comprise the above-mentioned step of designing the framework prior to manufacturing and manufacturing in accordance with the made design.

### BRIEF DESCRIPTION OF THE DRAWINGS

Hereinafter, embodiments of the present invention are described in more detail referring to drawings. The drawings are schematic and not to scale. In the drawings, same reference numbers refer to same or similar components. They show:
- Fig. 1:: a laser-cutting machine being an example of a metal sheet working machine;
- Figs. 2a-2c:: details of different embodiments of a construction part of a machine according to Fig. 1;
- Fig. 3: an additive manufacturing apparatus;
- Fig.4: a flowchart of a process;
- Fig. 5: a metal sheet bending machine being an alternative example of a metal sheet working machine;
- Figs. 6a-6c: details of different embodiments of a construction part of a machine according to Fig. 5;
- Fig. 7: an alternative construction part, with the shell shown partially removed; and
- Fig. 8: yet another construction part with the shell shown partially removed.

### DESCRIPTION OF THE PREFERRED EMBODIMENTS

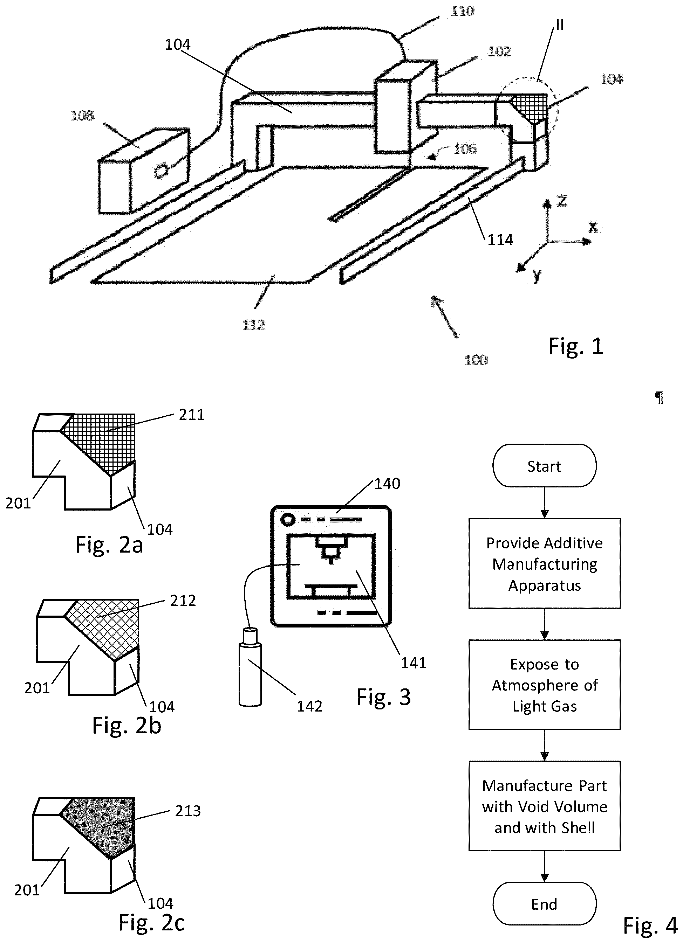

**Figure 1** shows an example of a laser-cutting machine 100. The machine comprises a laser radiation source 108, a radiation guide 110, a laser-cutting head 102, and a laser head moving mechanism comprising a bridge 104. The laser-cutting head 102 is movable in x-direction relative to the bridge 104 (see the depicted coordinate system). The bridge 104 is mounted on a working table (not shown), which constitutes a machine base and supports a workpiece 112. The bridge 104 itself is movable, for example on a pair or rails 114, in y direction relative to the base. The workpiece 112 may be a metal sheet that is cut by a laser beam emitted by the laser head.

During a laser-cutting operation, movements with high velocities and high accelerations have to be made in a machining area 106 both, in x and y direction. Movements in the y direction involve moving the entire bridge 104 together with the head. The weight of the bridge 104 is therefore a critical quantity. It also influences the vibration characteristics.

Therefore, the bridge 104 is constituted as a construction part that has an outer shell and a void volume enclosed by the outer shell. The outer shell also encloses an enforcing framework, the void volume being constituted by interstices in the framework. The framework and the outer shell may be of the same material and may be of one piece.

The void volume may be contiguous. Alternatively, it may consist of a plurality of sub-volumes, for example of a plurality of closed pores.

The volume may be filled by a gas lighter than air, such as He or NH₃ and/or may be at least partially evacuated.

**Figure 2a** shows a detail of marked region II in Fig. 1 for the example where the framework is a fine grating 211. **Figure 2b** shows the same detail for the example where the framework is a coarse grating 212. **Figure 2c** shows yet another example by depicting the same region with the framework constituted by an irregular open porous structure 213 with pores having round shapes without any edges. Such round shapes may add to the mechanical stability. In all embodiments, the outer shell 201 as in any embodiment is hermetical in that air is prevented from getting into the void volume.

Parts of the described kind with an airtight outer shell and with a framework in the interior may especially be made by additive manufacturing.

As schematically illustrated in **Figure 3****,** an additive manufacturing apparatus 140 or a workspace 141 thereof may sealed and be subject to an atmosphere of a light and essentially inert gas such as He, Ne, or NH₃ (gas source 142) and/or be subject to a negative pressure (vacuum or partial vacuum; required if an electron-beam additive manufacturing technique is used). By this, after the process is finished the void volume is filled by the light gas and/or subject to an negative pressure. Thereby, the parts are lighter not only than parts of the same shape made of bulk material but also lighter than they would be if the void volume was filled by air.

**Figure 4** illustrates a flowchart of an example of a part manufacturing method. The additive manufacturing apparatus or a workspace thereof is exposed to an atmosphere of light gas, and while this is the case, the part is manufactured. The atmosphere of the light gas (and/or partial vacuum or full vacuum) is maintained until the airtight shell is closed.

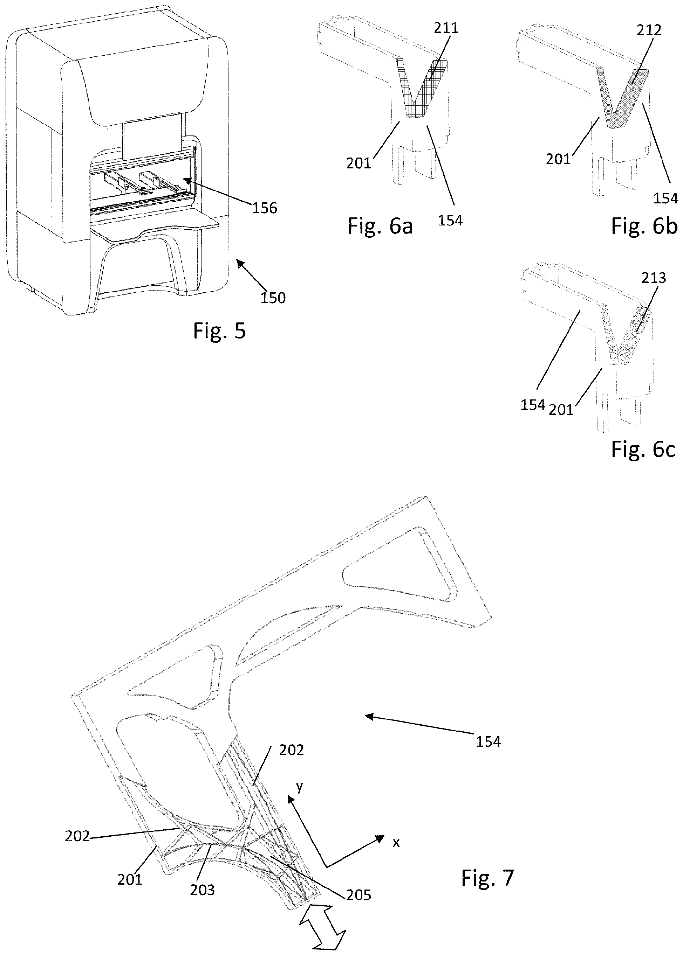

**Figure 5** shows a metal sheet bending machine 150 with a casing belonging to a machine base and with a machining area 156. In metal sheet bending machines, a tool is pressed towards an abutment structure, with a metal sheet between the tool and the abutment structure. The tool, parts that hold the tool, as well as the abutment structure are subject to high forces during the process. Also, for the industrial process to be efficient, they need to move and accelerate quickly, for example to be brought into position after loading the workpiece.

**Figures 6a-6c** show examples of such a part 154, with the framework being constituted by a fine grating 211, a coarse grating 212, and an irregular open porous structure 113, respectively, in analogy to Figures 2a-2c.

The approach of producing the parts by additive manufacturing has, in additional to making a structure with a closed shell and a void volume possible, an additional advantage. Namely, the framework may be specifically designed in view of a certain load distribution across the part. The load distribution during use is often well-known by being calculatable/definable by computer simulations such as finite element calculations or by performing experiments.

**Figure 7** shows a part of a metal sheet bending machine with an outer shell 201 and a plurality of beams 202 forming the framework. In the example of Fig, 7, main loads on the part will be in the y-direction near the position indicated by the double arrow. Therefore, the framework comprises a plurality of beams 202 that are oriented in approximately in the y direction. The framework is thereby configured to transfer loads (potentially of both signs) that are approximately parallel to the y direction from one end of the part to the other.

In addition to these longitudinal beams, the framework also has transversal beams giving some stability with respect to x-directions (transversal direction) as well as a contour following bent beam 205. Contour following structures ensure a predictable resilience of the whole part in cases where the part has more complex shapes as is the case for the part of Fig. 7.

Fig. 7 also illustrates that the void volume may comprise a plurality of mutually separate chambers 203 by the beams forming walls vertically extending between bottom and top walls formed by the shell.

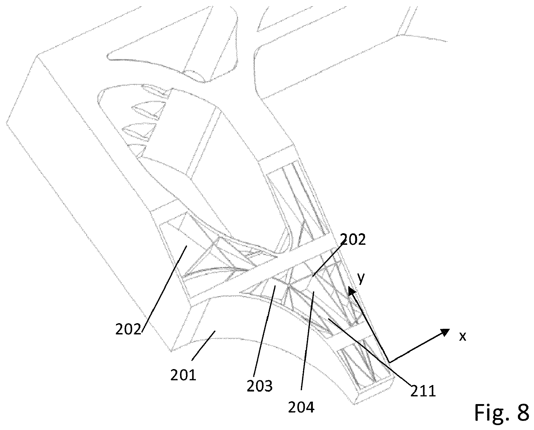

**Figure 8** shows another example, again with beams 202, 205 of different orientation. Similar to the embodiment of Fig. 8, the beams form walls vertically extending between the bottom and top walls formed by the shell. Compared to the part of Fig 8, the vertical extension (dimension perpendicular to the x-y plane) is larger.

In embodiments with mutually separate chambers, the chambers may optionally be filled by different gas compositions or be under different pressures. Especially, different pressures between different chambers may be used to control stability properties, stiffness etc. Also, the vibration behavior may be influenced by the gas content of the chambers. In this way, it becomes for example possible to engineer resonances and adapt them to vibrational properties of other parts of an apparatus having the part without having to compromise stability and/or weight.

Different pressures between the chambers may be achieved by varying the pressure during the additive manufacturing process when the different chambers are closed by finishing the outer shell 201. In Fig. 8, schematically, two kinds of chambers 203, 204 are illustrated.

## Claims

1. A metal sheet working and/or pipe working machine (100, 150), comprising a construction part (104, 154), the construction part comprising a closed outer shell (201) defining an interior hermetically sealed from an exterior, and, within the interior, a supporting framework, as well as a void volume, wherein the void volume is at least one of filled by a gas having a different composition than air; a vacuum volume.

2. The machine according to claim 1, wherein the void volume is filled by a gas having a lower density than air.

3. The machine according to claim 1 or 2, wherein the void volume is filled by a gas having a lower average molar mass than air.

4. The machine according to any one of the previous claims, wherein the framework comprises at least one of a grating (211, 212), an open porous structure (213), a closed-cell structure.

5. The machine according to any one of the previous claims, wherein the framework comprises a structure of beams comprising a plurality of beams (202, 205), the beams including beams oriented essentially parallel to a portion of the outer shell.

6. The machine according to any one of the previous claims, wherein the framework has a higher average density in zones of high load than in other zones.

7. The machine according to any one of the previous claims, wherein a material of the framework is the same as a material of the closed shell, and wherein the framework is contiguous with the shell (201).

8. The machine according to any one of the previous claims, wherein the construction part is mounted to be movable relative to a machine base, the machine comprising a drive for moving and positioning the construction part relative to the machine base.

9. The machine according to any one of the previous claims, wherein the construction part is metallic.

10. The machine according to any one of the previous claims, wherein the construction part is a part made by additive manufacturing.

11. A lightweight construction part (104, 154) for a for metal sheet working and/or pipe working machine (100, 150) according to any one of the previous claims, the construction part comprising a closed outer shell defining an interior hermetically sealed from an exterior, and, within the interior a supporting framework, as well as a void volume, wherein the void volume is at least one of filled by a gas having a different composition than air; a vacuum volume..

12. A batch of lightweight construction parts according to claim 11, the frameworks of the lightweight construction parts of the batch being identical.

13. A method of producing the lightweight construction part according to claim 11, the method comprising the steps of providing an additive manufacturing apparatus (140), exposing at least a workspace (141) thereof to an atmosphere of a gas different from ambient air, and manufacturing the construction part, wherein the construction part is exposed to this atmosphere at least while the shell is closed during manufacturing.

14. The method according to claim 13, comprising, prior to the step of manufacturing, a step of determining a direction of primary load or a zone of primary load, wherein the step of manufacturing comprises arranging structures of the framework oriented in the direction more densely than in directions perpendicular thereto, and/or making the framework more dense in the zone of primary load than in an average of the interior.

15. The method according to claim 13 or 14 wherein the step of exposing at least the workspace (141) to an atmosphere of gas different from ambient air comprises subjecting the workspace (141) to a vacuum.
